# EUROPÄISCHE PATENTSCHRIFT

(11) **EP 3 975 502 B1**
(45) Veröffentlichungstag und Bekanntmachung des Hinweises auf die Patenterteilung: **26.07.2023**
(21) Anmeldenummer: 20198692.4
(22) Anmeldetag: 28.09.2020
(51) Int. Cl.: H04L 67/12, H04L 61/30, H04L 67/2895, H04L 67/1004

(54) **VERFAHREN UND SYSTEM ZUR BEREITSTELLUNG VON ZEITKRITISCHEN DIENSTEN MITTELS EINER ABLAUFSTEUERUNGSUMGEBUNG**
METHOD AND SYSTEM FOR PROVIDING TIME-CRITICAL SERVICES BY MEANS OF A PROCESS CONTROL ENVIRONMENT
PROCÉDÉ ET SYSTÈME DE FOURNITURE DES SERVICES TEMPORELLEMENT CRITIQUES AU MOYEN D'UN ENVIRONNEMENT DE COMMANDE DE DÉROULEMENT

(43) Veröffentlichungstag der Anmeldung: 30.03.2022
(73) Patentinhaber: Siemens Aktiengesellschaft, 80333 München (DE)
(72) Erfinder: Albrecht, Harald, 90475 Nürnberg (DE); Höme, Stephan, 91126 Schwabach (DE); Talanis, Thomas, 91336 Heroldsbach (DE)
(74) Vertreter: Siemens Patent Attorneys

(56) Entgegenhaltungen:
- EP-A1- 3 544 265
- EP-A1- 3 588 908
- EP-A1- 3 751 421

## Beschreibung

Die vorliegende Erfindung betrifft ein Verfahren sowie ein System zur Bereitstellung von zeitkritischen Diensten, insbesondere in einem industriellen Automatisierungssystem.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

EP 3 588 908 A1 betrifft eine Zugangskontrollvorrichtung zur Bereitstellung eines wirksamen Sicherheitsschutzes während eines Fernzugriffs auf ein System. Die Zugangskontrollvorrichtung umfasst eine Front-End-Firewall mit einem ersten Netzwerkanschluss, um einen Remote-Computer zu verbinden. Mit der Front-End-Firewall ist ein Host verbunden, der wiederum mit einer Back-End-Firewall verbunden ist. Die Back-End-Firewall stellt einen zweiten Netzwerkanschluss bereit, um obiges System zu verbinden. Insbesondere scannt die Back-End-Firewall durch den zweiten Netzwerkanschluss System-Ressourcen, auf die ein Fernzugriff möglich ist, und legt System-Ressourcen fest, auf die der Remote-Computer zugreifen darf. Darüber hinaus stellt der Host Informationen über die System-Ressourcen bereit, auf die der Remote-Computer über den ersten Netzwerkanschluss zugreifen kann.

Aus der älteren internationalen Patentanmeldung mit dem Anmeldeaktenzeichen PCT/EP2020/063144 ist ein Verfahren zur Bereitstellung von Steuerungsanwendungen bekannt, bei dem Kommunikationsnetzadressen von Ablaufsteuerungskomponenten, die Steuerungsanwendungen bereitstellen, sowie Identifikatoren der Ablaufsteuerungskomponenten oder von Server-Einrichtungen, auf denen die Ablaufsteuerungskomponenten ausgeführt werden, von einer Überwachungseinrichtung abfragt werden. Aus den abgefragten Kommunikationsnetzadressen und Identifikatoren sowie aus Bezeichnungen der Steuerungsanwendungen erzeugt eine Konfigurationssteuerungseinrichtung Konfigurationsinformationen für eine Weiterleitungseinrichtung. Die Weiterleitungseinrichtung nimmt Anfragen von Endgeräten zur Nutzung der Steuerungsanwendungen entgegen und leitet diese entsprechend den Konfigurationsinformationen an eine jeweilige Ablaufsteuerungskomponente weiter.

In der älteren europäischen Patentanmeldung EP 3 715 986 A1 ist ein Verfahren zur automatischen Konfiguration eines Automatisierungsgeräts beschrieben, bei dem eine Geräte-Management-Einheit überwacht, ob dem Automatisierungsgerät ein Automatisierungssystem-Kenner zugeordnet wird. Wenn die Geräte-Management-Einheit eine solche Zuordnung erkannt hat, fragt sie bei einer zentralen Management-Einheit eines Clusters an, ob in einer Cluster-Zustands-Datenbank mit Beschreibungsobjekten für zumindest einen Knoten des Clusters bereits ein Beschreibungsobjekt existiert, in dem der dem Automatisierungsgerät zugeordnete Automatisierungssystem-Kenner hinterlegt ist. Falls ein solches Beschreibungsobjekt nicht existiert, oder falls ein solches Beschreibungsobjekt existiert, dieses jedoch als inaktiv deklariert ist, erzeugt die Geräte-Management-Einheit in der Cluster-Zustands-Datenbank für einen dem Automatisierungsgerät zugeordneten Knoten-Kenner ein Beschreibungsobjekt, in dem der dem Automatisierungsgerät zugeordnete Automatisierungs-Kenner hinterlegt ist.

Die ältere europäische Patentanmeldung mit dem Anmeldeaktenzeichen 20193690.3 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

Anwender von mittels Containervirtualisierung oder vergleichbaren Virtualisierungskonzepten realisierten Steuerungsanwendungen für industrielle Automatisierungssysteme erwarten eine möglichst unkomplizierte Integration derartiger Anwendungen in ihre bestehende Infrastruktur. Je nach Netzwerkanbindung und verwendeter Ablaufsteuerungsumgebung treffen insbesondere OPC UA Server auf höchst unterschiedliche anwenderseitige Konfigurationen, die durch Entwickler von Steuerungsanwendungen bei automatisierten Konfigurationsverfahren für die Steuerungsanwendungen berücksichtigt werden müssen. Bei der Netzwerkanbindung stellen anwenderseitig knappe IP-Adress- und TCP-Portnummernbereiche besondere Herausforderungen im Rahmen der Integration von Steuerungsanwendungen in eine bestehende Infrastruktur dar.

Der vorliegenden Erfindung liegt die Aufgabe zugrunde, ein Verfahren zur Bereitstellung von zeitkritischen Diensten zu schaffen, das eine Entkopplung zwischen mittels Containervirtualisierung oder vergleichbaren Virtualisierungskonzepten bereitgestellten Diensten einerseits und einer jeweiligen Ablaufsteuerungsumgebung und Netzwerkanbindung andererseits ermöglicht, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 14 angegebenen Merkmalen gelöst. Vorteilhafte Weiterbildungen sind in den abhängigen Ansprüchen angegeben.

Entsprechend dem erfindungsgemäßen Verfahren zur Bereitstellung von zeitkritischen Diensten mittels einer Ablaufsteuerungsumgebung ist den Diensten jeweils zumindest eine Server-Komponente zugeordnet, die durch eine in die Ablaufsteuerungsumgebung ladbare und dort ausführbare Ablaufsteuerungskomponente gebildet wird. Eine Konfigurationseinheit für zumindest eine Gateway-Komponente eines die Ablaufsteuerungsumgebung umfassenden Teilnetzes ermittelt jeweils zu innerhalb des Teilnetzes gültigen Adressierungsinformationen der Server-Komponenten zugeordnete global gültige Zugangsinformationen. In Abhängigkeit von einem mittels der Konfigurationseinheit vorgegebenen Betriebsmodus werden eine oder mehrere parallel bzw. seriell verbundene Gateway-Komponenten verwendet. Die lokal gültigen Adressierungsinformationen sind insbesondere Kommunikationsnetz-Adressen, Port-Nummern, Host-Namen bzw. vollständige Domain-Namen. Die zumindest eine Gateway-Komponente ist ein Load Balancer bzw. ein Reverse Proxy. Durch den Betriebsmodus wird eine Anzahl und eine Verschaltung zu verwendender Load Balancern bzw. Reverse Proxies vorgegeben.

Die Ablaufsteuerungskomponenten sind insbesondere Software-Container, die jeweils von anderen Software-Containern oder Container-Gruppen, z.B. Pods, isoliert innerhalb der Ablaufsteuerungsumgebung auf einem Host-Betriebssystem einer Server-Einrichtung ablaufen. Grundsätzlich können für die Ablaufsteuerungskomponenten auch alternative Micro-Virtualisierungskonzepte, wie Snaps, verwendet werden.

Die Ablaufsteuerungsumgebung kann beispielsweise eine Docker Engine oder einen Snap Core umfassen, die auf einer Server-Einrichtung abläuft. Vorteilhafterweise nutzen die Software-Container jeweils gemeinsam mit anderen auf der jeweiligen Server-Einrichtung ablaufenden Software-Containern einen Kernel des Host-Betriebssystems der Server-Einrichtung. Speicherabbilder für die Software-Container können beispielsweise aus einem durch eine Vielzahl von Nutzern lesend bzw. schreibend zugreifbaren Speicher- und Bereitstellungssystem abgerufen werden.

Erfindungsgemäß übermittelt die Konfigurationseinheit die Zugangsinformationen abbildende Weiterleitungs- bzw. Filterregeln an die zumindest eine Gateway-Komponente. Außerdem ist eine Aggregator-Komponente vorgesehen, um die global gültigen Zugangsinformationen zur Nutzung der Dienste außerhalb des Teilnetzes verfügbar zu machen bzw. bzw. bekannt zu geben. Darüber hinaus leitet die zumindest eine Gateway-Komponente Dienstzugriffsanfragen, insbesondere von außerhalb des Teilnetzes, entsprechend den Weiterleitungs- bzw. Filterregeln und dem Betriebsmodus an die Server-Komponenten weiter.

Die vorliegende Erfindung ermöglicht eine einfache Entwicklung und Verwendung von zeitkritischen Diensten bzw. Steuerungsanwendungen, insbesondere Steuerungsanwendungen mit OPC UA-Funktionalität, ohne bei Entwicklung und Installation spezifische Rahmenbedingungen hinsichtlich Netzwerkanbindung und Ablaufsteuerungsumgebung, beispielsweise Edge App Runtime Engine, Hyper-Converged Infrastructure oder Cloud-Plattform, berücksichtigen zu müssen. Dies wird vor allem durch eine automatische Konfiguration von Gateway-Komponenten für das die jeweilige Ablaufsteuerungsumgebung umfassende Teilnetz mittels einer Auswahl eines passenden Betriebsmodus erzielt.

Insbesondere können mit der vorliegenden Erfindung OPC UA Secure Channel bei Eintritt in das die Ablaufsteuerungsumgebung umfassende Teilnetz korrekt terminiert werden. Auf diese Weise kann innerhalb des Teilnetzes ohne Zertifikate oder mit Teilnetz-spezifischen Zertifikaten kommuniziert werden. Dies ermöglicht eine Entkopplung zwischen Teilnetz-internen Sicherheitskonzepten und Sicherheitskonzepten für eine externe Kommunikation. Außerdem können auch OPC UA Websocket-Verbindungen bei Eintritt in das Teilnetz korrekt terminiert und beispielsweise OPC UA-Serveranwendungen ohne Websocket-Unterstützung über eine Teilnetz-interne Transportschichtverbindung angesprochen werden.

Entsprechend einer bevorzugten Ausgestaltung der vorliegenden Erfindung übermitteln die Server-Komponenten oder diesen jeweils zugeordnete Verzeichnisdienst-Komponenten die innerhalb des Teilnetzes gültigen Adressierungsinformationen an die Konfigurationseinheit oder an die Aggregator-Komponente übermitteln. Vorteilhafterweise ist dabei nur die Aggregator-Komponente von außerhalb des die Ablaufsteuerungsumgebung umfassenden Teilnetzes, so dass die Verzeichnisdienst-Komponenten vor externem Zugriff abgesichert werden können. Für eine erhöhte Verfügbarkeit können beispielsweise mehrere zueinander redundante Aggregator-Komponenten verwendet werden.

Vorteilhafterweise übermitteln die Server-Komponenten oder die Verzeichnisdienst-Komponenten jeweils einen Identifikator für die jeweilige Server-Komponente an die Konfigurationseinheit. Anhand dieses Identifikators kann die Konfigurationseinheit jeweils für die jeweilige Server-Komponente die den innerhalb des Teilnetzes gültigen Adressierungsinformationen zugeordneten global gültige Zugangsinformationen zuverlässig ermitteln. Die Identifikatoren können beispielsweise Server-Identifikatoren oder Software-Container-Identifikatoren sein. Vorzugsweise bilden die Weiterleitungs- bzw. Filterregeln Zuordnungen zwischen den Identifikatoren zugeordneten innerhalb des Teilnetzes gültigen Adressierungsinformationen sowie den global gültigen Zugangsinformationen ab und umfassen Regeln für eine Port-Weiterleitung.

Entsprechend einer weiteren bevorzugten Ausgestaltung der vorliegenden Erfindung umfassen die global gültigen Zugangsinformationen Adressierungsinformationen und Zugriffsberechtigungen. Dabei werden die Zugriffsberechtigungen werden nach erfolgreicher Benutzer- bzw. Geräte-Authentifizierung verfügbar gemacht. Vorteilhafterweise werden diese Zugriffsberechtigungen, insbesondere für ausgewählte Benutzer bzw. Geräte auf ausgewählte Dienste, durch die Weiterleitungs- bzw. Filterregeln abgebildet.

In Abhängigkeit von dem mittels der Konfigurationseinheit vorgegebenen Betriebsmodus werden durch die zumindest eine Gateway-Komponente vorzugsweise ein oder mehrere global gültige IP-Adressen, ein individueller Port für jede Server-Komponente oder ein gemeinsamer Port für alle Server-Komponenten bzw. ein individueller Domain-Name für jede Server-Komponente oder ein gemeinsamer Domain-Name für alle Server-Komponenten auf die Server-Komponenten weitergeleitet. Somit können durch eine Auswahl eines geeigneten Betriebsmodus individuelle Rahmenbedingungen bei der Netzwerkanbindung des die Ablaufsteuerungsumgebung umfassenden Teilnetzes für eine Konfiguration der zumindest einen Gateway-Komponente berücksichtigt werden. Beispielweise werden in einem ausgewählten Betriebsmodus durch die zumindest eine Gateway-Komponente nur Dienstzugriffsanfragen an Server-Komponenten weitergeleitet, deren jeweilige innerhalb des Teilnetzes gültige Adressierungsinformation zugleich eine globale Gültigkeit aufweist.

Das erfindungsgemäße System zur Bereitstellung von zeitkritischen Diensten mittels einer Ablaufsteuerungsumgebung ist zur Durchführung eines Verfahrens entsprechend vorangehenden Ausführungen vorgesehen und umfasst eine Ablaufsteuerungsumgebung sowie mehrere, jeweils einem Dienst zugeordnete Server-Komponenten, die jeweils durch eine in die Ablaufsteuerungsumgebung ladbare und dort ausführbare Ablaufsteuerungskomponente gebildet sind. Außerdem sind zumindest eine Gateway-Komponente für ein die Ablaufsteuerungsumgebung umfassendes Teilnetz sowie eine Konfigurationseinheit für die zumindest eine Gateway-Komponente vorgesehen. Die zumindest eine Gateway-Komponente ist ein Load Balancer bzw. ein Reverse Proxy. Die Konfigurationseinheit ist dafür ausgestaltet und eingerichtet, jeweils zu innerhalb des Teilnetzes gültigen Adressierungsinformationen der Server-Komponenten zugeordnete global gültige Zugangsinformationen zu ermitteln und die Zugangsinformationen abbildende Weiterleitungs- bzw. Filterregeln an die zumindest eine Gateway-Komponente zu übermitteln. Dabei sind in Abhängigkeit von einem mittels der Konfigurationseinheit vorgegebenen Betriebsmodus eine oder mehrere parallel bzw. seriell verbundene Gateway-Komponenten zur Verwendung vorgesehen Durch den Betriebsmodus wird eine Anzahl und eine Verschaltung von Load Balancern bzw. Reverse Proxies vorgegeben.

Darüber hinaus umfasst das erfindungsgemäße System eine Aggregator-Komponente, die dafür ausgestaltet und eingerichtet ist, die global gültigen Zugangsinformationen zur Nutzung der Dienste außerhalb des Teilnetzes verfügbar zu machen. Demgegenüber ist die zumindest eine Gateway-Komponente dafür ausgestaltet und eingerichtet, Dienstzugriffsanfragen entsprechend den Weiterleitungs- bzw. Filterregeln und dem Betriebsmodus an die Server-Komponenten weiterzuleiten.

Die vorliegende Erfindung wird nachfolgend an einem Ausführungsbeispiel anhand der Zeichnung näher erläutert. Es zeigt die
- Figur 1: eine Anordnung mit einer Server-Komponente zur Bereitstellung von Diensten eines industriellen Automatisierungssystems sowie mit einer Gateway-Komponente,
- Figur 2: eine schematische Darstellung einer Umsetzung zwischen innerhalb eines die Server-Komponente gemäß Figur 1 umfassenden Teilnetzes gültigen Adressierungsinformationen und global gültige Zugangsinformationen,
- Figur 3-5: jeweils eine Gateway-Komponente für die Anordnung gemäß Figur 1 mit jeweils einer oder mehreren Load Balancern bzw. Reverse Proxies.

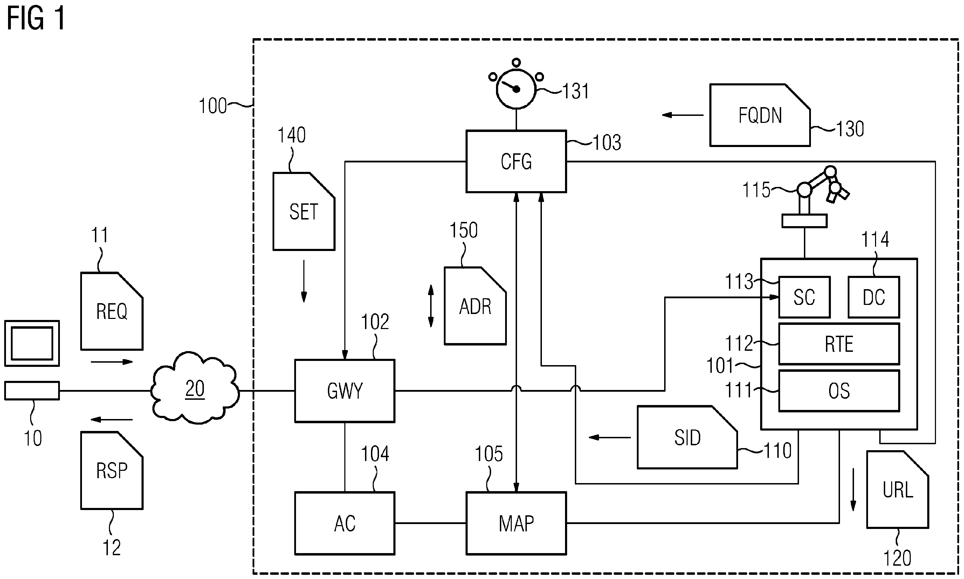

Die in Figur 1 dargestellte Anordnung umfasst eine Server-Einrichtung 101 zur Bereitstellung von Diensten bzw. Steuerungs- und Überwachungsanwendungen eines industriellen Automatisierungssystems. Die Dienste bzw. Steuerungs- und Überwachungsanwendungen des industriellen Automatisierungssystems sind exemplarisch für zeitkritische Dienste. Im vorliegenden Ausführungsbeispiel werden die Dienste bzw. Steuerungs- und Überwachungsanwendungen auf Grundlage von OPC UA bereitgestellt. Somit umfassen die Dienste bzw. Steuerungs- und Überwachungsanwendungen Schnittstellendefinitionen, die für einen dauerhaften Zugriff auf die Dienste bzw. Steuerungs- und Überwachungsanwendungen genutzt werden können.

Die Dienste können jeweils mehrere gleichartige oder identische Steuerungs- und Überwachungsanwendungen umfassen, die jeweils durch unterschiedliche Server-Einrichtungen bereitgestellt werden. Eine Bereitstellung mehrerer gleichartiger Steuerungsanwendungen auf unterschiedlichen Server-Einrichtungen gleichzeitig kann beispielsweise mittels Kubernetes-Daemon Sets gesteuert werden.

Außerdem umfasst die in Figur 1 dargestellte Anordnung ein Endgerät 10, das zumindest einem Benutzer zugeordnet ist, der im vorliegenden Ausführungsbeispiel Anfragen 11 entsprechend OPC UA zur Nutzung der Dienste über ein Kommunikationsnetz 20 an ein die Server-Einrichtung 101 umfassendes Automatisierungssystem bzw. Teilnetz 100 sendet und von der Server-Einrichtung dementsprechend Antworten 12 bzw. Messwerte und Statusmeldungen empfängt. Das Kommunikationsnetz 20 ist vorzugsweise als Time-Sensitive Network ausgestaltet, insbesondere entsprechend IEEE 802.1Q, IEEE 802.1AB, IEEE 802.1AS, IEEE 802.1BA bzw. IEEE 802.1CB.

Die Server-Einrichtung 101 implementiert vorzugsweise Funktionen von Steuerungsgeräten eines industriellen Automatisierungssystems, wie speicherprogrammierbaren Steuerungen, oder von Feldgeräten, wie Sensoren oder Aktoren. Im vorliegenden Ausführungsbeispiel dient Server-Einrichtung 101 einem Austausch von Steuerungs- und Messgrößen mit durch die Server-Einrichtung 101 gesteuerten Maschinen oder Vorrichtungen 115. Insbesondere ist die Server-Einrichtung 101 für eine Ermittlung geeigneter Steuerungsgrößen aus erfassten Messgrößen vorgesehen.

Das Endgerät 10 ist im vorliegenden Ausführungsbeispiel eine Bedien- und Beobachtungsstation und dient zur Visualisierung von Prozessdaten bzw. Mess- und Steuerungsgrößen, die durch die Server-Einrichtung 101 oder andere Automatisierungsgeräte verarbeitet bzw. erfasst werden. Insbesondere wird das Endgerät 10 zur Anzeige von Werten eines Regelungskreises und zur Veränderung von Regelungsparametern oder -programmen verwendet.

Den Diensten ist jeweils zumindest eine Server-Komponente 113 zugeordnet, die durch eine in eine Ablaufsteuerungsumgebung 112 ladbare und dort ausführbare Ablaufsteuerungskomponente gebildet wird. Die Ablaufsteuerungsumgebung 112 wird mittels der Server-Einrichtung 101 bereitgestellt und ist dort auf als Anwendung auf einem Host-Betriebssystem 111 der Server-Einrichtung 101 installiert. Darüber hinaus können Ablaufsteuerungskomponenten jeweils von der Server-Einrichtung 101 auf eine andere Server-Einrichtung zur dortigen Ausführung migriert bzw. auf anderen Server-Einrichtungen zeitgleich ausgeführt werden. Im vorliegenden Ausführungsbeispiel sind bzw. umfassen die Ablaufsteuerungskomponenten Software-Container, die jeweils von anderen Software-Containern, Container-Gruppen bzw. Pods isoliert innerhalb der Ablaufsteuerungsumgebung 112 auf dem Host-Betriebssystem 111 der Server-Einrichtung 101 ablaufen. Dabei nutzen die Software-Container jeweils gemeinsam mit anderen auf der Server-Einrichtung 101 ablaufenden Software-Containern einen Kernel des Host-Betriebssystems 111 der Server-Einrichtung 101.

Eine Isolation der Ablaufsteuerungskomponenten bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für Software-Container können beispielsweise aus einem durch eine Vielzahl von Nutzern lesend bzw. schreibend zugreifbaren Speicher- und Bereitstellungssystem abgerufen werden.

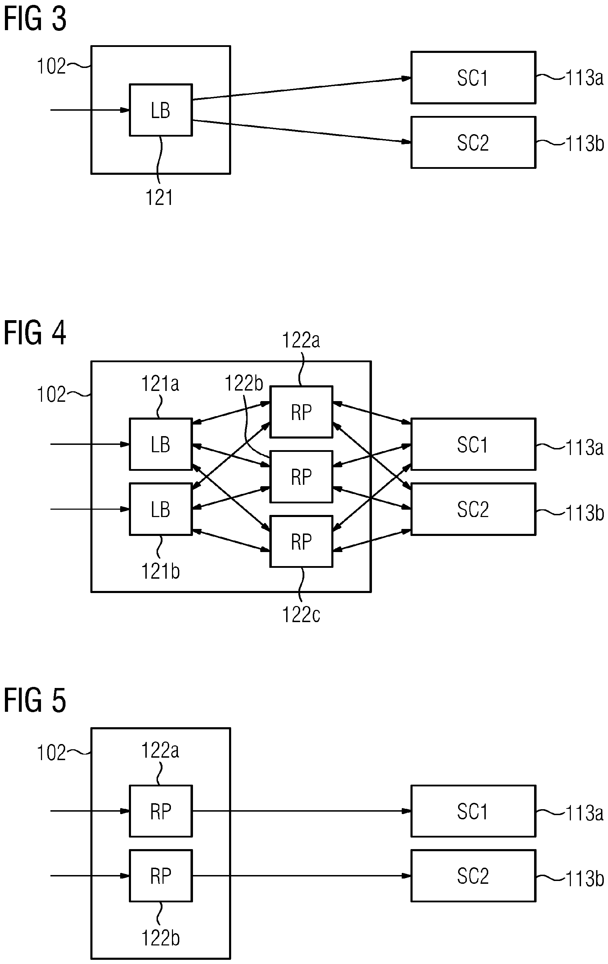

Darüber hinaus umfasst die in Figur 1 dargestellte Anordnung zumindest eine Gateway-Komponente 102 für das die Server-Einrichtung 101 umfassende Teilnetz 100. Die Gateway-Komponente 102 dient zur Weiterleitung von Dienstzugriffsanfragen 11 an den Dienstzugriffsanfragen 11 zugeordnete Server-Komponenten 113. Für die Gateway-Komponente 102 ist eine Konfigurationseinheit 103 vorgesehen, die jeweils zu innerhalb des Teilnetzes 100 gültigen Adressierungsinformationen 120, 130 der Server-Komponenten 113 zugeordnete global gültige Zugangsinformationen 150 ermittelt. In Abhängigkeit von einem mittels der Konfigurationseinheit 103 vorgebbaren Betriebsmodus 131 werden eine oder mehrere parallel bzw. seriell verbundene Load Balancer bzw. Reverse Proxies verwendet (siehe auch Figur 3-5), die von der Gateway-Komponente 102 umfasst sind.

Die lokal gültigen Adressierungsinformationen sind insbesondere Kommunikationsnetz-Adressen, Port-Nummern, Host-Namen bzw. vollständige Domain-Namen. Im vorliegenden Ausführungsbeispiel ermittelt die Konfigurationseinheit 103 eine Zuordnung zwischen den innerhalb des Teilnetzes 100 gültigen Adressierungsinformationen 120, 130 und den global gültigen Zugangsinformationen 150 in Zusammenwirkung mit einer Abgleich-Einheit 105, die von den Server-Komponenten 113 insbesondere Angaben 120 über zumindest lokal gültige URLs empfängt. Alternativ hierzu können die Server-Komponenten 113 Angaben 130 über FQDNs an die Konfigurationseinheit 103 übermitteln, die den FQDNs zugeordnete global gültige Zugangsinformationen 150 ermittelt und diese Informationen für Abgleich-Einheit 105 verfügbar macht.

Die Konfigurationseinheit 103 übermittelt die Zugangsinformationen 150 abbildende Weiterleitungs- bzw. Filterregeln 140 an die Gateway-Komponente 102. Auf dieser Grundlage leitet die Gateway-Komponente 102 Dienstzugriffsanfragen 11 entsprechend den Weiterleitungs- bzw. Filterregeln 140 und dem Betriebsmodus 131 an die Server-Komponenten 113 weiter.

Außerdem ist zumindest eine Aggregator-Komponente 104 vorgesehen, die im vorliegenden Ausführungsbeispiel mit der Abgleich-Einheit 105 verbunden ist und die global gültigen Zugangsinformationen 150 zur Nutzung der Dienste außerhalb des Teilnetzes 100 insbesondere für Benutzer am Endgerät 10 verfügbar macht. Grundsätzlich können mehrere zueinander redundante, global gültige Zugangsinformationen zusammenfassende Aggregator-Komponenten 104 verwendet werden.

Um Kommunikationsendpunkte für die Server-Komponenten 113 automatisch zu erfassen, werden nachfolgend zwei vorteilhafte Ansätze beschrieben. Entsprechend einem ersten Ansatz wird jeder Server-Komponente 113 eine Verzeichnisdienst-Komponente 114 zugeordnet, mittels der ein Local Discovery Service realisiert wird. Ein solcher Ansatz ist in der älteren europäischen Patentanmeldung mit dem Anmeldeaktenzeichen 20193690.3, auf deren Offenbarungsgehalt hier explizit Bezug genommen wird, detailliert beschrieben. In diesem Fall übermitteln die Verzeichnisdienst-Komponenten 114 die innerhalb des Teilnetzes 100 gültigen Adressierungsinformationen 120 bzw. die lokal gültigen URLs über die Abgleich-Einheit 105 an die Konfigurationseinheit 103 und an die Aggregator-Komponente 104.

Eine Alternative zu obigem ersten Ansatz besteht in einer Verwendung von Markierungen, die Software-Containern beigefügt sind. Die Markierungen umfassen Angaben 130 über gewünschte Hostnamen oder FQDNs für die jeweiligen Server-Komponenten 113. Diese Angaben 130 werden von den Server-Komponenten 113 an die Konfigurationseinheit 103 übermittelt und umfassen insbesondere Kommunikationsendpunkte der Server-Komponenten 113, beispielsweise in Form von OPC UA Server Endpoint URLs.

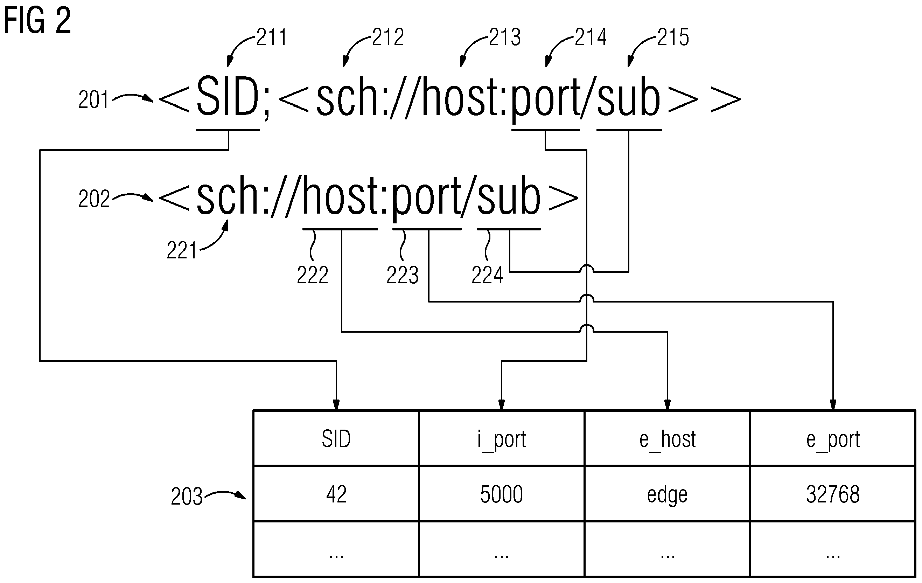

Insbesondere übermitteln die Server-Komponenten 113 oder die Verzeichnisdienst-Komponenten 114 bei beiden obigen Ansätzen jeweils einen Identifikator 110, 211 für die jeweilige Server-Komponente 113 an die Konfigurationseinheit 103 (siehe auch Figur 2), alternativ auch an die Aggregator-Komponente 104. Anhand des Identifikators 110, 211 für die jeweilige Server-Komponente 113 ermittelt die Konfigurationseinheit 103 vorzugsweise jeweils die den innerhalb des Teilnetzes 100 gültigen Adressierungsinformationen 120, 130, 201 zugeordneten global gültige Zugangsinformationen 150, 202. Die Identifikatoren 110, 211 können beispielsweise Server-Identifikatoren oder Software-Container-Identifikatoren sein. Die Weiterleitungs- bzw. Filterregeln 140 bilden insbesondere Zuordnungen zwischen den Identifikatoren 110, 211 zugeordneten innerhalb des Teilnetzes 100 gültigen Adressierungsinformationen 120, 130, 201 und den global gültigen Zugangsinformationen 150, 202 ab und umfassen Regeln für eine Port-Weiterleitung. Diese Regeln werden in einer in Figur 2 dargestellten Umsetzungstabelle 203 zusammengefasst, die durch die Konfigurationseinheit 103 oder durch die Abgleich-Einheit 105 verwaltet wird.

Die Umsetzungstabelle 203 identifiziert Server-Komponenten 113 anhand ihrer zugeordneten Identifikatoren 211 und weist diesen einen oder mehrere externe FQDNs 222 und TCP-Ports 223 zu. Falls ein mehrere Ports registriert oder markiert sind, umfasst die Umsetzungstabelle 203 mehrere Einträge bzw. Zeilen mit demselben Identifikator 211, aber mit verschiedenen Ports 223. Für die global gültige Zugangsinformationen 202 werden Schema-Elemente 212, 221 und Pfad-Elemente 215, 224 direkt aus den innerhalb des Teilnetzes 100 gültigen Adressierungsinformationen 201 übernommen. Bei Host-Angaben 213, 222 und Port-Angaben 214, 223 kann es dagegen Abweichungen geben, so dass extern gültige Host-Angaben 222 und Port-Angaben 223 der Umsetzungstabelle 203 zu entnehmen sind.

Für den Fall, dass für das in Figur 1 dargestellte Teilnetz 100 ein Gateway-Betriebsmodus gewünscht, entfällt vorgenanntes Transponieren zwischen innerhalb des Teilnetzes 100 gültigen Adressierungsinformationen 120, 130, 201 und global gültige Zugangsinformationen 150, 202. Stattdessen generiert die Konfigurationseinheit 103 nur für solche Server-Komponenten 113 Weiterleitungs- bzw. Filterregeln 140, denen bereits a priori global gültige Zugangsinformationen zugeordnet sind.

Vorzugsweise umfassen die global gültigen Zugangsinformationen 150, 202 Adressierungsinformationen und Zugriffsberechtigungen, wobei die Zugriffsberechtigungen werden erst nach erfolgreicher Benutzer- bzw. Geräte-Authentifizierung verfügbar gemacht werden. Insbesondere bilden die Weiterleitungs- bzw. Filterregeln 140 Zugriffsberechtigungen nur für ausgewählte bzw. autorisierte Benutzer bzw. Geräte auf ausgewählte Dienste ab.

Entsprechend Figur 3 bis 5 werden in Abhängigkeit von dem mittels der Konfigurationseinheit 103 vorgegebenen Betriebsmodus 131 durch die Gateway-Komponente 102
- eine oder mehrere global gültige IP-Adressen,
- ein individueller Port für jede Server-Komponente oder ein gemeinsamer Port für alle Server-Komponenten bzw.
- ein individueller Domain-Name für jede Server-Komponente oder ein gemeinsamer Domain-Name für alle Server-Komponenten
auf die Server-Komponenten 113a, 113b weitergeleitet. Insbesondere umfasst die Gateway-Komponente 102 dabei einen (Figur 3) oder mehrere Load Balancer (Figur 4) bzw. Reverse Proxies (Figur 4 und 5). Dabei wird durch den Betriebsmodus 131 eine Anzahl und eine Verschaltung von Load Balancern 121, 121a-121b bzw. Reverse Proxies 122a-122c vorgegeben.

Die Konfigurationseinheit 103 ordnet den einzelnen Server-Komponenten 113a, 113b externe FQDNs und Ports entsprechend dem jeweils gewählten Betriebsmodus zu. Beispielsweise können mehrere OPC UA Server mittels Container-Virtualisierung in einem Cluster je nach Wunsch entsprechend einer der nachfolgend beschriebenen Varianten bereitgestellt werden.

### 1. Eine externe IP-Adresse mit vielen externen Port-Nummern

Es können wahlweise nur ein einzelner FQDN oder mehrere, Server-Komponenten-spezifische FQDNs auf die IP-Adresse abgebildet werden. Die FQDNs sind dabei grundsätzlich jedoch nicht weiter von Bedeutung. Anstelle einer IP-Adresse können unter Redundanzgesichtspunkten mehrere IP-Adressen genutzt werden, die jedoch nicht-Server- Komponenten-spezifisch sind.

### 2. Mehrere Server-Komponenten-spezifischen FQDNs

In diesem Fall werden nur eine externe IP-Adresse und nur einem Port mit vielen Server-Komponenten-spezifischen FQDNs genutzt. Dabei werden die Server-Komponenten rein anhand ihrer FQDNs unterschieden. Auch hier können unter Redundanzgesichtspunkten mehrere IP-Adressen verwendet werden, insbesondere untereinander austauschbar.

### 3. Mehrere Server-Komponenten-spezifische externe IP-Adressen

Hierbei werden jeweils zwei Ports für den Local Discovery Service und die jeweilige Server-Komponente verwendet.

### 4. Eine externe IP-Adresse mit nur einem FQDN

In diesem Fall wird eine externe IP-Adresse mit nur einem Port und mit nur einem FQDN für die Gateway-Komponente verwendet. Dabei werden Reverse Proxies im Gateway-Betriebsmodus genutzt. Ein Weiterleiten zur jeweiligen Server-Komponente erfolgt nur anhand von Server-URIs, die bei einem Aufbau eines Secure Channels übermittelt worden sind, nicht aber anhand von FQDNs und Port-Nummern.

Dementsprechend sind unterschiedliche Gateway-Konfigurationen mit einem oder mehreren Load Balancern 121, 121a-121b, mehreren Reverse Proxies, keinem Load Balancer bzw. keinem Reverse Proxy möglich:
1. ein Load Balancer 121 nur mit TCP-Portweiterleitungsfunktion zur jeweiligen Server-Komponenten 113a, 113b (Variante 1, siehe Figur 3),
2. zweischichtige Architektur mit mehreren Load Balancern 121a, 121b, die eine Verbindungslast auf mehrere nachgelagerte Reverse Proxies 122a-122c verteilen, wobei die Reverse Proxies 122a-122c eingehende Transportschichtverbindungen anhand während eines Verbindungsaufbaus übertragener URLs oder während eines Sitzungsaufbaus übertragener URIs an die jeweilige Server-Komponente 113a, 113b weiterleiten (Variante 2, siehe Figur 4),
3. mehrere Reverse Proxies 122a-122b (ohne Load Balancer) leiten nicht nur eingehende Transportschichtverbindungen an die jeweilige Server-Komponente 113a, 113b weiter, sondern dienen gleichzeitig als Load-Balancer, indem sie selbst direkt über externe IP-Adressen erreichbar sind (Variante 3, siehe Figur 5).

Für Variante 4 kann entweder Konfiguration 2 oder Konfiguration 3 genutzt werden. Dabei leiten die Reverse Proxies eingehende Anfragen auf Basis einer jeweiligen Server-Komponenten-URI (siehe Protokoll- bzw. Service-Feld "application URI" entsprechend OPC UA Spezifikationen) anstelle auf Basis eines Endpoint URL weiter.

## Patentansprüche

1. Verfahren zur Bereitstellung von zeitkritischen Diensten mittels einer Ablaufsteuerungsumgebung, bei dem
- den Diensten jeweils zumindest eine Server-Komponente (113) zugeordnet ist, die durch eine in die Ablaufsteuerungsumgebung (112) ladbare und dort ausführbare Ablaufsteuerungskomponente gebildet wird,
- eine Konfigurationseinheit (103) für zumindest eine Gateway-Komponente (102) eines die Ablaufsteuerungsumgebung umfassenden Teilnetzes (100) jeweils zu innerhalb des Teilnetzes gültigen Adressierungsinformationen der Server-Komponenten zugeordnete global gültige Zugangsinformationen (150) ermittelt,
- in Abhängigkeit von einem mittels der Konfigurationseinheit vorgegebenen Betriebsmodus (131) eine oder mehrere parallel und/oder seriell verbundene Gateway-Komponenten verwendet werden, wobei die zumindest eine Gateway-Komponente ein Load Balancer und/oder ein Reverse Proxy ist,
- durch den Betriebsmodus eine Anzahl und eine Verschaltung von Load Balancern (121, 121a-121b) und/oder Reverse Proxies (122a-122c) vorgegeben wird,
- die Konfigurationseinheit die Zugangsinformationen abbildende Weiterleitungs- und/oder Filterregeln (140) an die zumindest eine Gateway-Komponente übermittelt,
- eine Aggregator-Komponente (104) die global gültigen Zugangsinformationen zur Nutzung der Dienste außerhalb des Teilnetzes verfügbar macht,
- die zumindest eine Gateway-Komponente Dienstzugriffsanfragen (11) entsprechend den Weiterleitungs- und/oder Filterregeln und dem Betriebsmodus an die Server-Komponenten weiterleitet.

2. Verfahren nach Anspruch 1,
bei dem die Ablaufsteuerungskomponenten Software-Container sind oder umfassen, die jeweils von anderen Software-Containern oder Container-Gruppen isoliert innerhalb der Ablaufsteuerungsumgebung auf einem Host-Betriebssystem einer Server-Einrichtung ablaufen.

3. Verfahren nach einem der Ansprüche 1 oder 2,
bei dem die Server-Komponenten oder diesen jeweils zugeordnete Verzeichnisdienst-Komponenten (114) die innerhalb des Teilnetzes gültigen Adressierungsinformationen an die Konfigurationseinheit (103) oder an die Aggregator-Komponente (104) übermitteln.

4. Verfahren nach Anspruch 3,
bei dem die Server-Komponenten oder die Verzeichnisdienst-Komponenten (114) jeweils einen Identifikator (110, 211) für die jeweilige Server-Komponente an die Konfigurationseinheit (103) übermitteln.

5. Verfahren nach Anspruch 4,
bei dem die Konfigurationseinheit jeweils anhand des Identifikators (110, 211) für die jeweilige Server-Komponente die den innerhalb des Teilnetzes gültigen Adressierungsinformationen zugeordneten global gültige Zugangsinformationen ermittelt.

6. Verfahren nach Anspruch 5,
bei dem die Weiterleitungs- und/oder Filterregeln Zuordnungen zwischen den Identifikatoren zugeordneten innerhalb des Teilnetzes gültigen Adressierungsinformationen und den global gültigen Zugangsinformationen abbilden und bei dem die Weiterleitungs- und/oder Filterregeln Regeln für eine Port-Weiterleitung umfassen.

7. Verfahren nach einem der Ansprüche 4 bis 6,
bei dem die Identifikatoren Server-Identifikatoren oder Software-Container-Identifikatoren sind.

8. Verfahren nach einem der Ansprüche 1 bis 7,
bei dem die global gültigen Zugangsinformationen Adressierungsinformationen und Zugriffsberechtigungen umfassen und bei dem die Zugriffsberechtigungen nach erfolgreicher Benutzer- und/oder Geräte-Authentifizierung verfügbar gemacht werden.

9. Verfahren nach Anspruch 8,
bei dem die Weiterleitungs- und/oder Filterregeln Zugriffsberechtigungen für ausgewählte Benutzer und/oder Geräte auf ausgewählte Dienste abbilden.

10. Verfahren nach einem der Ansprüche 1 bis 9,
bei dem in Abhängigkeit von dem mittels der Konfigurationseinheit vorgegebenen Betriebsmodus durch die zumindest eine Gateway-Komponente eine oder mehrere global gültige IP-Adressen, ein individueller Port für jede Server-Komponente oder ein gemeinsamer Port für alle Server-Komponenten und/oder ein individueller Domain-Name für jede Server-Komponente oder ein gemeinsamer Domain-Name für alle Server-Komponenten auf die Server-Komponenten weitergeleitet werden.

11. Verfahren nach Anspruch 10,
bei dem in einem ausgewählten Betriebsmodus durch die zumindest eine Gateway-Komponente nur Dienstzugriffsanfragen an Server-Komponenten weitergeleitet werden, deren jeweilige innerhalb des Teilnetzes gültige Adressierungsinformation zugleich eine globale Gültigkeit aufweist.

12. Verfahren nach einem der Ansprüche 1 bis 11,
bei dem die lokal gültigen Adressierungsinformationen Kommunikationsnetz-Adressen, Port-Nummern, Host-Namen und/oder vollständige Domain-Namen sind.

13. Verfahren nach einem der Ansprüche 1 bis 12,
bei dem mehrere zueinander redundante Aggregator-Komponenten (104) verwendet werden.

14. System zur Bereitstellung von zeitkritischen Diensten mittels einer Ablaufsteuerungsumgebung mit
- einer Ablaufsteuerungsumgebung (112),
- mehreren, jeweils einem Dienst zugeordneten Server-Komponenten (113), die jeweils durch eine in die Ablaufsteuerungsumgebung ladbare und dort ausführbare Ablaufsteuerungskomponente gebildet sind,
- zumindest eine Gateway-Komponente (104) eines die Ablaufsteuerungsumgebung umfassenden Teilnetzes (100),
- einer Konfigurationseinheit (103) für die zumindest eine Gateway-Komponente, wobei die Konfigurationseinheit dafür ausgestaltet und eingerichtet ist, jeweils zu innerhalb des Teilnetzes gültigen Adressierungsinformationen der Server-Komponenten zugeordnete global gültige Zugangsinformationen (150) zu ermitteln und die Zugangsinformationen abbildende Weiterleitungs- und/oder Filterregeln (140) an die zumindest eine Gateway-Komponente zu übermitteln, wobei in Abhängigkeit von einem mittels der Konfigurationseinheit vorgegebenen Betriebsmodus eine oder mehrere parallel und/oder seriell verbundene Gateway-Komponenten zur Verwendung vorgesehen sind, wobei die zumindest eine Gateway-Komponente ein Load Balancer und/oder ein Reverse Proxy ist und durch den Betriebsmodus eine Anzahl und eine Verschaltung von Load Balancern (121, 121a-121b) und/oder Reverse Proxies (122a-122c) vorgegeben wird,
- einer Aggregator-Komponente (104), die dafür ausgestaltet und eingerichtet ist, die global gültigen Zugangsinformationen zur Nutzung der Dienste außerhalb des Teilnetzes verfügbar zu machen,
- wobei die zumindest eine Gateway-Komponente dafür ausgestaltet und eingerichtet ist, Dienstzugriffsanfragen (11) entsprechend den Weiterleitungs- und/oder Filterregeln und dem Betriebsmodus an die Server-Komponenten weiterzuleiten.

## Claims

1. Method for the provision of time-critical services by means of a flow control environment, in which
- at least one server component (113) is assigned in each case to the services, said server component (113) being formed by a flow control component loadable into and executable in the flow control environment (112),
- a configuration unit (103) for at least one gateway component (102) of a subnetwork (100) comprising the flow control environment in each case determines globally valid access information (150) assigned to addressing information of the server components that is valid within the subnetwork,
- on the basis of an operating mode (131) predefined by means of the configuration unit, one or more gateway components connected in parallel and/or in series are used, wherein the at least one gateway component is a load balancer and/or a reverse proxy,
- a number and a connection of load balancers (121, 121a-121b) and/or reverse proxies (122a-122c) are predefined by the operating mode,
- the configuration unit transmits forwarding and/or filter rules (140) mapping the access information to the at least one gateway component,
- an aggregator component (104) makes the globally valid access information available for use of the services outside the subnetwork,
- the at least one gateway component forwards service access requests (11) to the server components according to the forwarding and/or filter rules and the operating mode.

2. Method according to Claim 1,
in which the flow control components are or comprise software containers which run in each case on a host operating system of a server device isolated from other software containers or container groups within the flow control environment.

3. Method according to one of Claims 1 or 2,
in which the server components or directory service components (114) assigned in each case to them transmit the addressing information that is valid within the subnetwork to the configuration unit (103) or to the aggregator component (104).

4. Method according to Claim 3,
in which the server components or the directory service components (114) in each case transmit an identifier (110, 211) for the respective server component to the configuration unit (103) .

5. Method according to Claim 4,
in which the configuration unit in each case determines, on the basis of the identifier (110, 211) for the respective server component, the globally valid access information assigned to the addressing information that is valid within the subnetwork.

6. Method according to Claim 5,
in which the forwarding and/or filter rules map assignments between addressing information assigned to the identifiers that is valid within the subnetwork and the globally valid access information, and in which the forwarding and/or filter rules comprise rules for port forwarding.

7. Method according to one of Claims 4 to 6,
in which the identifiers are server identifiers or software container identifiers.

8. Method according to one of Claims 1 to 7,
in which the globally valid access information comprises addressing information and access authorizations, and in which the access authorizations are made available following successful user and/or device authentication.

9. Method according to Claim 8,
in which the forwarding and/or filter rules map access authorizations onto selected services for selected users and/or devices.

10. Method according to one of Claims 1 to 9,
in which, on the basis of the operating mode predefined by means of the configuration unit, one or more globally valid IP addresses, an individual port for each server component or a common port for all server components and/or an individual domain name for each server component or a common domain name for all server components are forwarded by the at least one gateway component to the server components.

11. Method according to Claim 10,
in which, in one selected operating mode, only service access requests of which the respective addressing information valid within the subnetwork simultaneously has a global validity are forwarded by the at least one gateway component to server components.

12. Method according to one of Claims 1 to 11,
in which the locally valid addressing information comprises communication network addresses, port numbers, host names and/or complete domain names.

13. Method according to one of Claims 1 to 12,
in which a plurality of mutually redundant aggregator components (104) are used.

14. System for the provision of time-critical services by means of a flow control environment, having
- a flow control environment (112),
- a plurality of server components (113) assigned in each case to a service and formed in each case by a flow control component loadable into and executable in the flow control environment,
- at least one gateway component (104) of a subnetwork (100) comprising the flow control environment,
- a configuration unit (103) for the at least one gateway component, wherein the configuration unit is designed and configured in each case to determine globally valid access information (150) assigned to addressing information of the server components that is valid within the subnetwork and to transmit forwarding and/or filter rules (140) mapping the access information to the at least one gateway component, wherein, on the basis of an operating mode predefined by means of the configuration unit, one or more gateway components connected in parallel and/or in series are provided for use, wherein the at least one gateway component is a load balancer and/or a reverse proxy, and a number and a connection of load balancers (121, 121a-121b) and/or reverse proxies (122a-122c) are predefined by the operating mode,
- an aggregator component (104) which is designed and configured to make the globally valid access information available for use of the services outside the subnetwork,
- wherein the at least one gateway component is designed and configured to forward service access requests (11) to the server components according to the forwarding and/or filter rules and the operating mode.

## Revendications

1. Procédé pour disposer de services critiques temporellement au moyen d'un environnement de commande de déroulement, dans lequel
- on associe aux services respectivement au moins un composant (113) serveur que l'on forme par un composant de commande de déroulement, qui peut être chargé dans l'environnement (112) de commande de déroulement et y être réalisé,
- une unité (103) de configuration d'au moins un composant (102) de passerelle d'un réseau (100) partiel, comprenant l'environnement de commande de déroulement, détermine respectivement des informations (150) d'accès, valables globalement et associées à des informations d'adresse, valables au sein du réseau partiel, des composants serveur,
- en fonction d'un mode (131) de fonctionnement donné à l'avance au moyen de l'unité de configuration, on utilise un ou plusieurs composants de passerelle montés en parallèle et/ou en série, dans lequel le au moins un composant de passerelle est un load balancer et/ou un reverse proxy,
- par le mode de fonctionnement, on prescrit un nombre et un câblage de load balancer (121, 121a-121b) et/ou de reverse proxy (122a-122c),
- l'unité de configuration transmet au au moins un composant de passerelle des règles (140) d'acheminement et/ou de filtrage représentant les informations d'accès,
- un composant (104) agrégateur rend disponible les informations d'accès valables globalement, pour l'utilisation des services à l'extérieur du réseau partiel,
- le au moins un composant de passerelle achemine au composant serveur des demandes (11) d'accès aux services conformément aux règles d'acheminement et/ou de filtrage et au mode de fonctionnement.

2. Procédé suivant la revendication 1,
dans lequel les composants de commande de déroulement sont des conteneurs logiciels ou comprennent des conteneurs logiciels, qui, isolés respectivement d'autres conteneurs logiciels ou groupes de conteneurs logiciels, se déroulent dans l'environnement de commande de déroulement sur un système de fonctionnement hôte d'un dispositif serveur.

3. Procédé suivant l'une des revendications 1 ou 2,
dans lequel les composants serveurs ou des composants (114) de services de catalogue, qui leur appartiennent respectivement, transmettent les informations d'adresse valables au sein du réseau partiel à l'unité (103) de configuration ou aux composants (104) agrégateurs.

4. Procédé suivant la revendication 3,
dans lequel les composants serveurs ou les composants (114) de services de catalogue transmettent respectivement, à l'unité (103) de configuration, un identifiant (110, 211) du composant serveur respectif.

5. Procédé suivant la revendication 4,
dans lequel l'unité de configuration détermine respectivement, à l'aide de l'identifiant (110, 211) du composant serveur respectif, les informations d'accès valables globalement associées aux informations d'adresse valables au sein du réseau partiel.

6. Procédé suivant la revendication 5,
dans lequel les règles d'acheminement et/ou de filtrage représentent des associations entre les informations d'adresse associées aux identifiants et valables au sein du réseau partiel et les informations d'accès valables globalement, et dans lequel les règles d'acheminement et/ou de filtrage comprennent des règles pour un acheminement d'accès.

7. Procédé suivant l'une des revendications 4 à 6,
dans lequel les identifiants sont des identifiants de serveur ou des identifiants de conteneur logiciel.

8. Procédé suivant l'une des revendications 1 à 7,
dans lequel les informations d'accès valables globalement comprennent des informations d'adresse et des autorisations d'accès, et dans lequel on rend disponibles les autorisations d'accès, après une authentification couronnée de succès d'un utilisateur et/ou d'un appareil.

9. Procédé suivant la revendication 8,
dans lequel les règles d'acheminement et/ou de filtrage représentent des autorisations d'accès à des services sélectionnés pour des utilisateurs et/ou des appareils sélectionnés.

10. Procédé suivant l'une des revendications 1 à 9,
dans lequel, en fonction du mode de fonctionnement donné à l'avance au moyen de l'unité de configuration, on achemine, au composant serveur, par le au moins un composant de passerelle, une ou plusieurs adresses IP valables globalement, un accès individuel pour chaque composant serveur ou un accès commun pour tous les composants serveurs, et/ou un nom de domaine individuel pour chaque composant serveur ou un nom de domaine commun pour tous les composants serveurs.

11. Procédé suivant la revendication 10,
dans lequel, dans un mode de fonctionnement sélectionné, on achemine, au composant serveur, par le au moins un composant de passerelle, seulement des demandes d'accès aux services, dont l'information d'adresse respective valable au sein du réseau partiel a en même temps une validité globale.

12. Procédé suivant l'une des revendications 1 à 11,
dans lequel les informations d'adresses valables localement sont des adresses de réseau de communication, des numéros d'accès, des noms d'hôtes et/ou des noms de domaines complets.

13. Procédé suivant l'une des revendications 1 à 12,
dans lequel on utilise plusieurs composants (104) agrégateurs redondants les uns par rapport aux autres.

14. Système pour disposer de services critiques temporellement, au moyen d'un environnement de commande de déroulement comprenant :
- un environnement (112) de commande de déroulement,
- plusieurs composants (113) serveurs, qui sont associés respectivement à un service et qui sont formés respectivement par un composant de commande de déroulement pouvant être chargé dans l'environnement de commande de déroulement et y être réalisé,
- au moins un composant (104) de passerelle d'un réseau (100) partiel comprenant l'environnement de commande de déroulement,
- une unité (103) de configuration du au moins un composant de passerelle, dans laquelle l'unité de configuration est conformée et agencée pour déterminer des informations (150) d'accès valables globalement associées respectivement à des informations d'adresse, valables au sein du réseau partiel, des composants serveurs et pour transmettre des règles (140) d'acheminement et/ou de filtrage représentant les informations d'accès au au moins un composant de passerelle, dans laquelle, en fonction d'un mode de fonctionnement, donné au moyen de l'unité de configuration, il est prévu d'utiliser un ou plusieurs composants de passerelle montés en parallèle et/ou en série, dans laquelle le au moins un composant de passerelle est un load balancer et/ou un reverse proxy, et il est prescrit, par le mode de fonctionnement, un nombre et un câblage de balancer load (121, 121a-b) et/ou de reverse proxy (122a-122c),
- un composant (104) agrégateur, qui est conformé et agencé pour rendre disponible les informations d'accès valables globalement pour l'utilisation des services à l'extérieur du réseau partiel,
- dans lequel le au moins un composant de passerelle est conformé et agencé pour acheminer aux composants serveurs des demandes (11) d'accès aux services conformément aux règles d'acheminement et/ou de filtrage et au mode de fonctionnement.
